# EUROPÄISCHE PATENTSCHRIFT

(11) **EP 3 385 520 B1**
(45) Veröffentlichungstag und Bekanntmachung des Hinweises auf die Patenterteilung: **18.03.2020**
(21) Anmeldenummer: 18163830.5
(22) Anmeldetag: 26.03.2018
(51) Int. Cl.: F01N 13/00, F01N 3/021, F02M 26/14

(54) **ABGASNACHBEHANDLUNGSVORRICHTUNG FÜR EINEN VERBRENNUNGSMOTOR**
EXHAUST GAS TREATMENT DEVICE FOR A COMBUSTION ENGINE
DISPOSITIF DE TRAITEMENT DE GAZ D'ÉCHAPPEMENT POUR UN MOTEUR À COMBUSTION

(30) Priorität: 04.04.2017 DE 102017205697
(43) Veröffentlichungstag der Anmeldung: 10.10.2018
(73) Patentinhaber: VOLKSWAGEN AKTIENGESELLSCHAFT, 38440 Wolfsburg (DE)
(72) Erfinder: Car, Onur Ulas, 10115 Berlin (DE); Schlothauer, Janet, 38486 Klötze (DE)

(56) Entgegenhaltungen:
- AT-A2- 507 633
- DE-A1-102010 045 503
- DE-A1-102012 219 811
- DE-U1-202011 100 885
- FR-A1- 2 892 154
- FR-A3- 2 983 521

## Beschreibung

Die Erfindung betrifft ein Abgasnachbehandlungssystem für einen Verbrennungsmotor sowie Verbrennungsmotor gemäß dem Oberbegriff der unabhängigen Ansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder einen NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5% Harnstoff und 67,5% Wasser zusammen.

Um nach einem Kaltstart des Verbrennungsmotors die Abgasnachbehandlungskomponenten möglichst schnell auf die benötigte Betriebstemperatur zu bringen, ist eine möglichst motornahe Anordnung der Abgasnachbehandlungskomponenten wünschenswert. Dies ist jedoch nicht immer möglich, da der Bauraum begrenzt ist. Daher werden der SCR-Katalysator und/oder der Rußpartikelfilter oftmals in einer motorfernen Unterbodenlage eines Kraftfahrzeuges angeordnet. Es sind motornahe SCR-Systeme bekannt, bei denen ein SCR-Katalysator und ein Rußpartikelfilter über einen Trichter verbunden sind. Durch die Trichtergeometrie wird versucht, den Gegendruck im Abgaskanal zu reduzieren, wodurch jedoch vergleichsweise viel Bauraum benötigt wird oder die Katalysatoren und/oder der Partikelfilter entsprechend kleinvolumig ausgeführt werden müssen, was eine häufige Regeneration erfordert und den Wirkungsgrad der Abgasreinigung aufgrund der kleinen Volumina begrenzt. Ferner sind aus dem Stand der Technik Abgasnachbehandlungssysteme mit einem motornahen Oxidationskatalysator und einem motornahen Partikelfilter bekannt. Zur weiteren Reduktion der Stickoxidemissionen ist bei Verbrennungsmotoren, welche mittels eines Abgasturboladers aufgeladen sind, eine Niederdruck-Abgasrückführung vorgesehen, welche stromabwärts der Turbine aus dem Abgaskanal abgezweigt und in den Ansaugtrakt stromaufwärts des Verdichters des Abgasturboladers mündet.

Aus der DE 10 2013 111 033 A1 ist ein Vorrichtung zum Thermomanagement in einer Abgasanlage eines Verbrennungsmotors für ein Kraftfahrzeug bekannt, bei der in der Abgasanlage des Verbrennungsmotors ein Entkopplungselement mit einem flexiblen Leitungselement angeordnet ist, wobei das Entkopplungselement eine Innenkomponente in Form eines Wickelschlauchs zum Leiten eines Abgasstroms aufweist. Dabei ist eine Abgasrückführung vorgesehen, welche stromabwärts eines Partikelfilters aus dem Abgaskanal abzweigt und über ein weiteres Entkopplungselement mit einer Abgasrückführungsleitung verbunden ist, welche über einen Abgaskühler Abgas der Frischluftleitung stromaufwärts eines Verdichters eines Abgasturboladers zuführt.

Die FR 2 983 521 A3 offenbart einen Partikelfilter mit einem Auslass, wobei an dem Auslass parallel zueinander ein erster Ausgang und ein zweiter Ausgang ausgebildet sind, wobei der erste Ausgang mit dem Abgaskanal und der zweite Ausgang mit einer Abgasrückführungsleitung verbunden sind.

Aus der FR 2 892 154 A1 ist ein Verbrennungsmotor mit einem Abgasnachbehandlungssystem bekannt, in welchem stromabwärts einer Turbine eines Abgasturboladers eine Abgasnachbehandlungskomponente angeordnet ist, wobei sich der Abgaskanal stromabwärts der Abgasnachbehandlungskomponente in einen Abgaskanal, welcher zum Endrohr führt und in eine Abgasrückführungsleitung, welche mit dem Ansaugtrakt des Verbrennungsmotors verbunden ist, verzweigt.

Darüber hinaus offenbart die DE 20 2011 100 885 U1 ein Filterelement mit einem Filtergehäuse und einem im Filtergehäuse angeordneten Filter zum Filtern eines Abgasstroms eines Verbrennungsmotors, bei welchem das Filtergehäuse als flexibles Leitungselement, insbesondere als Metallbalg, ausgebildet ist.

Dabei besteht ein Zielkonflikt aus einer möglichst motornahen Anordnung der Abgasnachbehandlungskomponenten, um die Abgasnachbehandlungsvorrichtung klein und kompakt ausführen zu können und eine schnelle Erwärmung der Abgasnachbehandlungskomponenten nach einem Kaltstart des Verbrennungsmotors zu ermöglichen, und einer möglichst strömungsgünstigen Niederdruckabgasrückführung.

Der Erfindung liegt nun die Aufgabe zugrunde, den Strömungswiderstand beim Einströmen des Abgases in die Niederdruck-Abgasrückführung zu reduzieren und somit den Abgasgegendruck in dem Abgasnachbehandlungssystem des Verbrennungsmotors zu reduzieren.

Die Aufgabe wird durch ein Abgasnachbehandlungssystem gemäss Anspruch 1 gelöst.

Besonders bevorzugt ist dabei, wenn in dem zweiten Trichter ein Filterelement angeordnet ist. Um ein Eindringen von Partikeln und sonstigen Verbrennungsrückständen über die Niederdruck-Abgasrückführung auf das Verdichterrad des Abgasturboladers und in die Brennräume des Verbrennungsmotors zu vermeiden, und insbesondere auch eine Versottung der Niederdruck-Abgasrückführung zu vermeiden, ist an dem zweiten Trichter ein Filterelement angeordnet, an dem sich feste und/oder flüssige Abgasbestandteile abscheiden können. Insbesondere ist hier ein Filterelement angeordnet, welches das Eindringen von Rußpartikeln in die Niederdruck-Abgasrückführung unterbindet und entsprechend feinporig ausgeführt ist.

Der Verbrennungsmotor ist vorzugsweise als selbstzündender Verbrennungsmotor nach dem Diesel-Prinzip ausgeführt, wobei der erste Katalysator ein Oxidationskatalysator oder ein NOx-Speicherkatalysator ist und der Partikelfilter als Diesel-Partikelfilter (DPF) ausgestaltet ist. Alternativ kann der Verbrennungsmotor auch als fremdgezündeter Verbrennungsmotor nach dem Otto-Prinzip ausgeführt sein, wobei der erste Katalysator vorzugsweise als Drei-Wege-Katalysator und der Partikelfilter als Otto-Partikelfilter (OPF) ausgeführt ist.

Durch die in den abhängigen Ansprüchen aufgeführten Merkmale sind vorteilhafte Verbesserungen und Weiterentwicklungen des im unabhängigen Anspruch angegebenen Abgasnachbehandlungssystems möglich.

In bevorzugter Ausgestaltung der Erfindung ist vorgesehen, dass der zweiten Trichter an seiner Einlassseite einen ovalen Querschnitt aufweist und sich auf seiner Auslassseite auf einen runden Querschnitt verjüngt. Durch einen ovalen Einlassquerschnitt kann der Einlauf des zweiten Trichters einen größeren Strömungsquerschnitt als bei einem zylindrischen, konischen Trichter aufweisen, wodurch der Abgasgegendruck reduziert werden kann. Da die Trichter sowie das Filterelement am Einlass der Niederdruck-Abgasrückführung mit maximalem Querschnitt unmittelbar stromabwärts des Filterkörpers des Diesel-Partikelfilters angeordnet sind, kann somit, neben dem Anstieg des Abgasgegendrucks durch die Beladung des Diesel-Partikelfilters, ein weiterer Anstieg des Abgasgegendrucks vermindert werden, da eine Abgasklappe im Hauptkanal bei einem größeren Querschnitt des EGR Filters weniger stark angestellt und damit die Abgasstrecke weniger aufgestaut werden muss, um das Druckgefälle über die ND-EGR Strecke zu erzeugen, dass benötigt wird, um den gewünschten Abgasmassenstrom zurückzuführen.

In einer bevorzugten Ausführungsform der Erfindung ist vorgesehen, dass der Abgaskanal des Abgassystems in dem Abschnitt zwischen dem Katalysator und dem Partikelfilter krümmungsfrei ausgebildet ist. Durch einen krümmungsfreien Abgaskanal können der Strömungswiderstand und die damit verbundenen Strömungsverluste zwischen dem Katalysator und dem Partikelfilter gering gehalten werden, sodass es zu keinem zusätzlichen Anstieg des Abgasgegendrucks kommt und sich in diesem Bereich keine Ablagerungen bilden, welche den Strömungsquerschnitt verkleinern und somit den Strömungswiderstand erhöhen.

In einer weiteren Verbesserung der Erfindung ist vorgesehen, dass der erste Trichter in ein Gehäuse des Partikelfilters integriert ist. Der erste Trichter kann sowohl stromabwärts des Partikelfilters als auch in dem Gehäuse des Partikelfilters ausgebildet sein. Durch einen in das Gehäuse des Partikelfilter integrierten Trichter ist eine besonders kompakte Bauform des erfindungsgemäßen Abgasnachbehandlungssystems möglich. Zudem ist eine Strömungsführung ab einem Auslass des Filterkörpers des Partikelfilters möglich, wodurch Strömungsablösungen und zusätzliche Verwirbelungen, welche den Strömungswiderstand und somit den Abgasgegendruck erhöhen, vermieden werden können.

Gemäß einer vorteilhaften Verbesserung des Abgasnachbehandlungssystems ist vorgesehen, dass der zweite Trichter an seiner Einlassseite einen Strömungsquerschnitt von mindestens 4000 mm² aufweist. Durch einen Strömungsquerschnitt von mindestens 4000 mm² kann der Strömungswiderstand beim Einströmen von Abgas in die Niederdruck-Abgasrückführung weiter reduziert werden.

Erfindungsgemäß ist vorgesehen, dass der zweite Trichter ein Filterelement trägt. Zudem kann bei einem Strömungsquerschnitt von mindestens 4000 mm² ein hinreichend großes Filterelement an dem Einlauf des zweiten Trichters angeordnet werden, um eine effiziente Reinigung des Abgas vor Eintritt in die Niederdruck-Abgasrückführung zu erreichen und insbesondere das Eindringen von Rußpartikeln zu vermeiden und die Funktion der Diagnose eines defekten DPF zu gewährleisten.

Erfindungsgemäß ist vorgesehen, dass an einer Übergangsstelle zwischen dem zweiten Trichter und einem Abgasrückführungskanal ein Entkopplungselement vorgesehen ist. Durch ein Entkopplungselement können die Schwingungen und Vibrationen, welche von dem Verbrennungsmotor und dem Abgaskanal auf den Partikelfilter übertragen werden, gedämpft werden, sodass diese Schwingungen und Vibrationen nur in begrenztem Ausmaß auf die Komponenten der Niederdruck-Abgasrückführung übertragen werden. Dabei ist das Entkopplungselement vorzugsweise in einem Übergangsbereich zwischen einem ersten Ausgang des Partikelfilters und der Abgasrückführungsleitung angeordnet und gewährleistet somit, dass die Bewegungen aus Dynamik und Thermomechanik aufgenommen werden und die Spannungen in den Komponenten der Niederdruck-Abgasrückführung reduziert werden.

In einer vorteilhaften Verbesserung der Erfindung ist vorgesehen, dass ein Abgasrückführungskanal der Niederdruck-Abgasrückführung verschiebbar gelagert ist. Durch eine verschiebbare Lagerung der Niederdruck-Abgasrückführung ist eine weitere Entkopplung des Abgasrückführungskanals von dem Partikelfilter möglich. Insbesondere kann die Abgaslauflänge zwischen dem Partikelfilter und einem Niederdruck-Abgasrückführungs-Kühler angepasst werden, um Druckwellen abzudämpfen und Resonanzschwingungen zu vermeiden.

Alternativ oder zusätzlich ist mit Vorteil vorgesehen, dass an einem Abgasrückführungskanal der Niederdruck-Abgasrückführung eine verschiebbare Trennstelle ausgebildet ist. Durch eine verschiebbare Trennstelle kann eine weitere schwingungstechnische Entkopplung des Abgasrückführungskanals von dem Hauptkanal des Abgassystems, insbesondere von dem Partikelfilter, erreicht werden.

Gemäß einer vorteilhaften Weiterbildung der Erfindung ist vorgesehen, dass der zweite Trichter eine von dem dritten Trichter unterschiedliche Einlaufgeometrie aufweist. Durch unterschiedliche Einlaufgeometrien ist eine quantitative Aufteilung des Abgasstroms zwischen dem Hauptkanal und der Niederdruck-Abgasrückführung möglich. Dabei können die Geometrien für den jeweiligen Volumenstrom optimiert werden, wodurch der Abgasgegendruck im Abgassystem weiter abgesenkt werden kann.

Besonders bevorzugt ist dabei, wenn der dritte Trichter einen größeren Einlaufquerschnitt als der zweite Trichter aufweist. Dabei weist der dritte Trichter vorzugsweise einen größeren Eingangsquerschnitt als der zweite Trichter auf, da der Volumenstrom an Abgas durch den Hauptkanal in der Regel deutlich größer als der über die Niederdruck-Abgasrückführung zurückgeführte Volumenstrom von Abgas ist.

In einer weiteren, vorteilhaften Verbesserung des Abgasnachbehandlungssystems ist vorgesehen, dass ein Abgasrückführungskanal der Niederdruck-Abgasrückführung einen Innendurchmesser von 30 mm bis 50 mm, vorzugsweise von 40 mm bis 50 mm, aufweist. Durch einen Innendurchmesser von mehr als 30 mm und weniger als 50 mm kann der Strömungswiderstand in dem Abgasrückführungskanal reduziert werden und gleichzeitig der Bauraumbedarf für die Abgasrückführung in vertretbaren Grenzen gehalten werden. Durch einen größeren Querschnitt des Abgasrückführungskanals kann die Strömungsgeschwindigkeit in der Abgasrückführung reduziert werden, wodurch die Verweildauer des Abgases in der Abgasrückführung vergrößert wird und sich das Abgas auf dem Weg durch den Abgasrückführungskanal stärker abkühlen kann. Besonders bevorzugt ist dabei, wenn der Abgasrückführungskanal einen Innendurchmesser von mindestens 40 mm aufweist. Durch einen Querschnitt des Abgasrückführungskanals mit einem Innendurchmesser von mindestens 40 mm kann der Strömungswiderstand soweit abgesenkt werden, dass der Staudruck im Abgaskanal nicht merklich ansteigt.

Erfindungsgemäß wird ein Verbrennungsmotor mit einem Einlass und einem Auslass vorgeschlagen, wobei der Einlass mit einem Ansaugtrakt des Verbrennungsmotors verbunden ist, und wobei der Auslass mit einem Abgassystem des Verbrennungsmotors verbunden ist, wobei das Abgassystem einen Abgaskanal aufweist, in welchem in Strömungsrichtung eines Abgases durch den Abgaskanal eine Turbine eines Abgasturboladers und stromabwärts der Turbine ein Partikelfilter angeordnet ist, wobei der Partikelfilter einen Filterkörper aufweist, wobei stromabwärts des Partikelfilters ein erster Abgastrichter vorgesehen ist, um den Querschnitt des Abgaskanals von einem ersten Querschnitt des Filterkörpers auf einen zweiten Querschnitt zu reduzieren, wobei sich der erste Abgastrichter in einen zweiten Abgastrichter und einen dritten Abgastrichter verzweigt, wobei der zweite Abgastrichter mit einer Niederdruck-Abgasrückführung verbunden ist, wobei der dritte Trichter mit einem Hauptkanal des Abgassystems verbunden ist, und wobei die Niederdruck-Abgasrückführung den Abgaskanal mit einer Frischgasleitung des Ansaugtraktes stromaufwärts eines Verdichters des Abgasturboladers verbindet. Durch den erfindungsgemäßen Verbrennungsmotor mit dem Partikelfilter und der Niederdruck-Abgasrückführung ist es möglich, die Rohemissionen des Verbrennungsmotors zu verbessern. Durch die im Vergleich zu den aus dem Stand der Technik bekannten Lösungen kurze und strömungsgünstig gestaltete Niederdruck-Abgasrückführung kann der Abgasgegendruck in dem Abgassystem reduziert werden, wodurch der Verbrauch des Verbrennungsmotors reduziert werden kann. Unter einer Niederdruck-Abgasrückführung ist in diesem Zusammenhang eine Abgasrückführung zu verstehen, welche Abgas aus dem Abgaskanal stromabwärts einer Turbine eines Abgasturboladers entnimmt und dieses Abgas dem Ansaugtrakt des Verbrennungsmotors stromaufwärts eines durch die Turbine des Abgasturboladers angetriebenen Verdichters zuführt. Dabei ist das Abgasnachbehandlungssystem des Verbrennungsmotors kompakt ausgeführt, sodass der Bauraumbedarf gering gehalten werden kann und der Verbrennungsmotor auch in vergleichsweise kleine Motorräume eingebaut werden kann. Unter einer motornahen Anordnung des Partikelfilters ist in diesem Zusammenhang eine Anordnung mit einer Abgaslauflänge von maximal 60 cm, vorzugsweise von maximal 40 cm, ab einem Auslass des Verbrennungsmotors zu verstehen.

Erfindungsgemäß wird ferner ein Partikelfilter zur Abgasnachbehandlung eines Verbrennungsmotors vorgeschlagen, wobei der Partikelfilter ein Gehäuse, in welchem ein Filterkörper des Partikelfilters angeordnet ist, umfasst, wobei das Gehäuse eine Einlassöffnung und zwei Auslassöffnungen aufweist, wobei das Gehäuse in einem ersten Abschnitt stromabwärts des Filterkörpers als ein erster Trichter ausgebildet ist, und sich stromabwärts des ersten Trichters in einen zweiten Trichter und einen dritten Trichter verzweigt, und wobei die erste Auslassöffnung an dem zweiten Trichter und die dritte Auslassöffnung an dem dritten Trichter ausgebildet ist. Durch einen erfindungsgemäßen Partikelfilter kann der Abgasgegendruck abgesenkt werden und somit der Verbrauch des Verbrennungsmotors und die Rohemissionen des Verbrennungsmotors reduziert werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel eines Verbrennungsmotors mit einem erfindungsgemäßen Abgasnachbehandlungssystem in einer schematischen Darstellung;
- Figur 2: ein Ausführungsbeispiel eines erfindungsgemäßen Verbrennungsmotors mit einem erfindungsgemäßen Abgasnachbehandlungssystem in einer 3D-Darstellung;
- Figur 3: einen Partikelfilter eines erfindungsgemäßen Abgasnachbehandlungssystems;
- Figur 4: einen auslassseitigen Trichter eines erfindungsgemäßen Partikelfilters, welcher sich in zwei weitere Trichter verzweigt; und
- Figur 5: eine Niederdruck-Abgasrückführung eines erfindungsgemäßen Abgasnachbehandlungssystems mit einer verschiebbaren Trennstelle für den Abgasrückführungskanal.

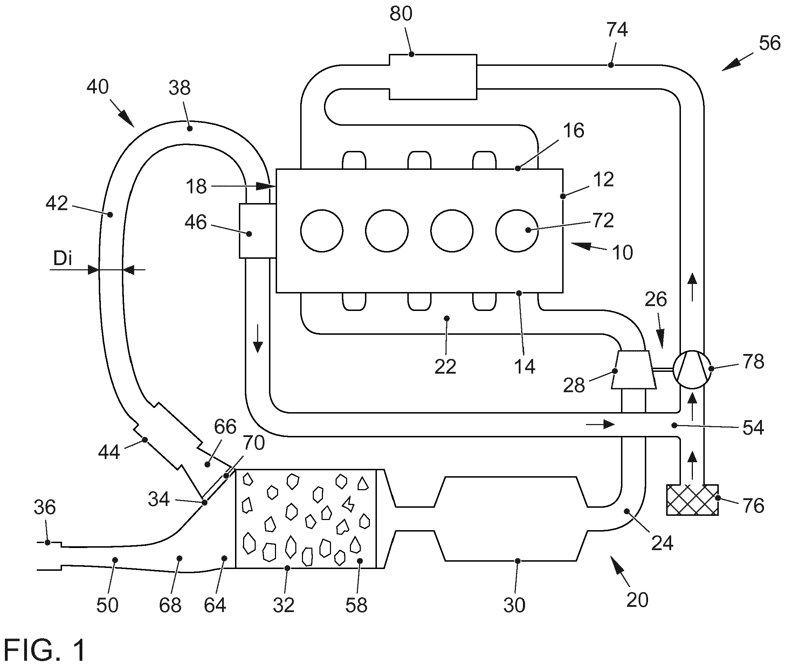

Figur 1 zeigt ein Ausführungsbeispiel eines erfindungsgemäßen Verbrennungsmotors 10 mit einem erfindungsgemäßen Abgasnachbehandlungssystem. Der Verbrennungsmotor 10 weist einen Motorblock 12 auf, in dem mindestens ein Brennraum 72, vorzugsweise wie in Figur 1 dargestellt vier Brennräume 72, ausgebildet sind. Der Verbrennungsmotor 10 weist einen Einlass 16 auf, welcher mit einem Ansaugtrakt 56 des Verbrennungsmotors 10 verbunden ist. Der Ansaugtrakt 56 umfasst eine Frischgasleitung 74, in welcher ein Luftfilter 76 und stromabwärts des Luftfilters 76 ein Verdichter 78 eines Abgasturboladers 26 angeordnet ist. Stromabwärts des Verdichters 78 und stromaufwärts der Brennräume 72 ist ein Ladeluftkühler 80 angeordnet, um die durch den Verdichter 78 komprimierte Frischluft abzukühlen und somit die Füllung der Brennräume 72 weiter zu verbessern. Der Verbrennungsmotor 10 weist ferner einen Auslass 14 auf, an welchem ein Abgaskrümmer 22 angeschlossen ist, welcher mit einem Abgassystem 20 des Verbrennungsmotors 10 verbunden ist. Das Abgassystem 20 weist einen motornahen ersten Katalysator 30, insbesondere einen Oxidationskatalysator, und einen stromabwärts des ersten Katalysators 30 ebenfalls motornah angeordneten Partikelfilter 32 auf. Unter einer motornahen Anordnung ist in diesem Zusammenhang eine Anordnung mit einer Abgaslauflänge von maximal 60 cm, vorzugsweise von maximal 40 cm, ab dem Auslass 14 des Verbrennungsmotors 10 zu verstehen. Der Partikelfilter 32 weist ein Gehäuse 86 auf, in dem ein Filterkörper 58 des Partikelfilters 32 angeordnet ist. An dem Partikelfilter 32 ist in Strömungsrichtung eines Abgases durch den Partikelfilter 32 stromabwärts des Filterkörpers 58 eine Verzweigung 34 ausgebildet, an der sich ein Abgaskanal 24 des Abgassystems 20 in eine Niederdruck-Abgasrückführung 40 und einen Hauptkanal 50, welcher den Partikelfilter 32 mit einem Endrohr 36 des Abgassystems 20 verbindet, verzweigt. Die Niederdruck-Abgasrückführung 40 weist einen Niederdruck-Abgasrückführungs-Kühler 46 auf, welcher an einer um 90° zur Auslassseite 14 des Verbrennungsmotors 10 versetzten Seite des Verbrennungsmotors 10, insbesondere an einer Stirnseite 18 des Motorblocks 12, angeordnet ist. Im Abgassystem 20 ist stromabwärts des Auslasses 14 des Verbrennungsmotors 10 und stromaufwärts des ersten Katalysators 30 eine Turbine 28 des Abgasturboladers 26 angeordnet, welche den Verdichter 78 in dem Ansaugtrakt 56 antreibt.

Die Niederdruck-Abgasrückführung 40 weist einen Abgasrückführungskanal 42 auf, welcher den Abgaskanal 24 an der Verzweigung 34 stromabwärts des Partikelfilters 32 mit einer Einmündung 54 in den Ansaugtrakt 56 stromabwärts des Luftfilters 76 und stromaufwärts des Verdichters 78 verbindet. Unmittelbar an die Verzweigung 34 anschließend kann in dem Abgasrückführungskanal 42 ein Entkopplungselement 44 angeordnet sein, um die aus der Anregung durch die Vibrationen des Verbrennungsmotors 10 auf den Partikelfilter 32 übertragenen Schwingungen von dem Abgasrückführungskanal 42 zu entkoppeln. Der Partikelfilter 32 weist stromabwärts des Filterkörpers 58 einen ersten Trichter 64 auf, welcher sich in Strömungsrichtung in einen zweiten Trichter 66 und einen dritten Trichter 68 verzweigt. Der erste Trichter 64 verjüngt einen Strömungsquerschnitt Q des Abgaskanals 24 von einem ersten Querschnitt Qi, welcher dem Querschnitt des Filterkörpers 58 entspricht, auf einen zweiten Querschnitt Q₂. Der zweite Trichter 66 ist über das Entkopplungselement 44 mit dem Abgasrückführungskanal 42 verbunden. Zudem trägt der zweite Trichter 66 ein Filterelement 70, um das Eindringen von Rußpartikeln in die Niederdruck-Abgasrückführung 40 zu verhindern. Der dritte Trichter 68 ist mit dem Hauptkanal 50 des Abgassystems 20 verbunden. In dem Hauptkanal 50 des Abgassystems 20 ist stromabwärts des dritten Trichters 68 und stromaufwärts des Endrohrs 36 eine Abgasklappe 98 angeordnet. Durch das Schließen der Abgasklappe 98 kann der Abgasgegendruck und somit die über die Niederdruck-Abgasrückführung 40 zurückgeführte Abgasmenge erhöht werden.

Der Abgasrückführungskanal 42 weist vorzugsweise einen im Wesentlichen konstanten Querschnitt mit einem Innendurchmesser Di von ca. 40 mm auf. Die Länge L des Abgasrückführungskanals 42 beträgt von der Verzweigung 34 bis zu dem Niederdruck-Abgasrückführungskühler 46 vorzugsweise ca. 530 mm, wobei der Abgasrückführungskanal 42 in diesem Abschnitt eine Biegung 38 mit einem Biegungswinkel α von ca. 280° aufweist. Der Niederdruck-Abgasrückführungs-Kühler 46 weist ein Gehäuse 62 auf, welches mittels Befestigungsmitteln 48, insbesondere mittels Bolzen 52 oder Schrauben 60, an einer Stirnseite 18 des Motorblocks 12 befestigt ist.

In einer alternativen Ausführungsform der Erfindung kann das Entkopplungselement 44 auch entfallen. Ferner sind Abgasrückführungskanäle 42 mit einer Lauflänge von 300 mm bis 900 mm, insbesondere von 450 mm bis 650 mm denkbar, um bei kompakter Bauweise eine effiziente und strömungsgünstige Abgasrückführung zu ermöglichen.

Durch die zunehmende Verschärfung der Abgasgesetzgebung, insbesondere in Bezug auf die Stickoxid-Emissionen, ist es notwendig, innermotorische Maßnahmen und Maßnahmen zur Abgasnachbehandlung zu verbinden. Eine Möglichkeit, die Rohemissionen des Verbrennungsmotors 10 zu verbessern, besteht darin, der Frischluft Abgas zuzumischen, um die Bildung von Stickoxid-Emissionen zu verringern. Dabei ist es vorteilhaft, wenn das zurückgeführte Abgas möglichst kühl ist. Aus diesem Grund ist in der Niederdruck-Abgasrückführung 40 ein Niederdruck-Abgasrückführungs-Kühler 46 angeordnet. Die Wirksamkeit dieses Kühlers 46 wird maßgeblich durch die Wärmeabstrahlung des Verbrennungsmotors 10 beeinflusst. Durch die erfindungsgemäße Lösung wird der Abgasrückführungskühler 46 von der heißen Auslassseite 14, insbesondere von dem Abgaskrümmer 22 räumlich getrennt, wodurch die Wirksamkeit des Niederdruck-Abgasrückführungs-Kühlers 46 verbessert wird oder bei gleicher Kühlleistung weniger Kühlmittel zirkulieren muss. Dadurch wird der Gesamtwirkungsgrad des Verbrennungsmotors 10 verbessert. Ferner kann der Strömungswiderstand in der Niederdruck-Abgasrückführung 40 durch den vergleichsweise großen Innendurchmesser Di und einen entsprechend großen Radius der Biegung 38 bei vergleichsweise kurzer Länge L des Abgasrückführungskanals 42 gering gehalten werden. Durch das Entkopplungselement 44 können die Schwingungen und Bewegungen des Partikelfilters 32 von der Niederdruck-Abgasrückführung 40 entkoppelt werden, wobei die Bewegungen aus Dynamik und Thermomechanik gedämpft werden und damit die Spannungen aller beteiligten Bauteile 42, 46, 48 der Niederdruck-Abgasrückführung 40 gesenkt werden können.

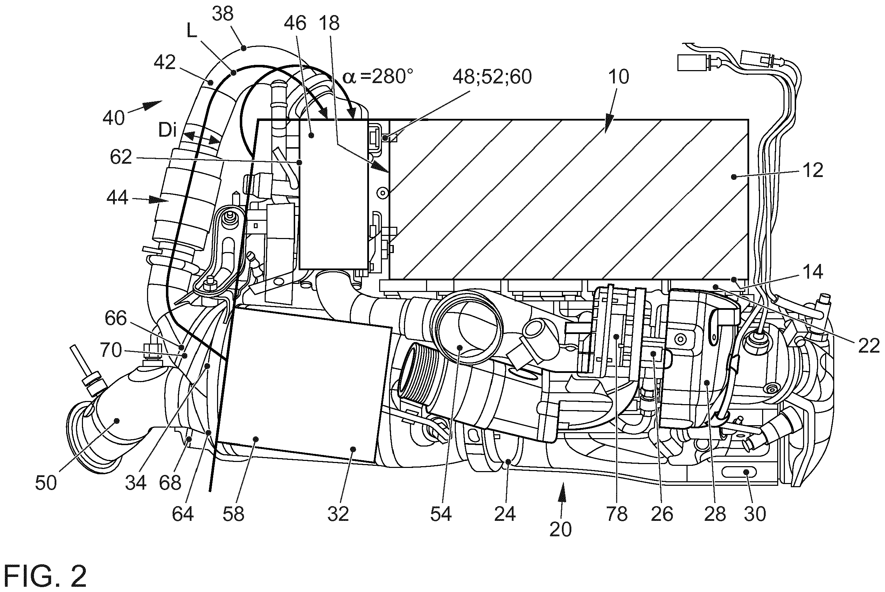

In Figur 2 ist der erfindungsgemäße Verbrennungsmotor 10 mit dem erfindungsgemäßen Abgasnachbehandlungssystem in einer dreidimensionalen Darstellung gezeigt. Durch das erfindungsgemäße Abgasnachbehandlungssystem kann ein minimaler Abgasgegendruck bei einer kompakten und platzsparenden Bauweise realisiert werden. Der Niederdruck-Abgasrückführungs-Kühler 46 wird durch das heiße Abgas auf der Auslassseite 14 nicht direkt angeströmt und somit weniger stark als vergleichbare Abgas-Rückführungs-Kühler 46 aufgeheizt. Dadurch kann auch die Länge L des Abgasrückführungskanals 42 kürzer ausgelegt werden, da das Abgas auf dieser Wegstrecke weniger stark abgekühlt werden muss.

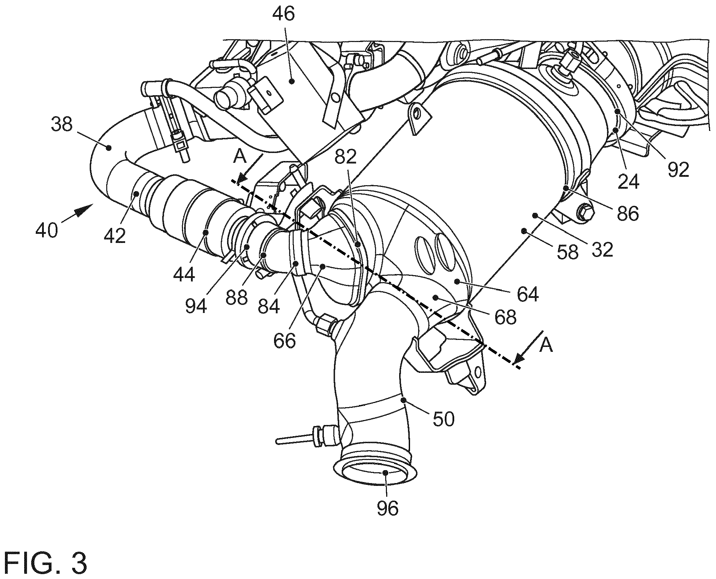

In Figur 3 ist ein Partikelfilter 32 eines erfindungsgemäßen Abgasnachbehandlungssystems dargestellt. Der Partikelfilter 32 umfasst einen Filterkörper 58, welcher in einem Gehäuse 86 angeordnet ist. Das Gehäuse 86 weist eine Einlassöffnung 92 und zwei Auslassöffnungen 94, 96 auf. Dabei ist das Gehäuse 86 des Partikelfilters 32 stromabwärts des Filterkörpers 58 als ein erster Trichter 64 ausgebildet, welcher sich in einen zweiten Trichter 66 und einen dritten Trichter 68 verzweigt. Der dritte Trichter 68 weist dabei vorzugsweise einen größeren Einlassquerschnitt Q₃ als der zweite Trichter 66 auf. Der zweite Trichter 66 ist über die erste Auslassöffnung 94 mit dem Abgasrückführungskanal 42 einer Niederdruck-Abgasrückführung 40 verbunden. Der dritte Trichter 68 ist über die Auslassöffnung 96 mit einem Hauptkanal 50 des Abgassystems 20 verbunden. Die zweite Auslassöffnung 96 weist dabei einen größeren Öffnungsquerschnitt als die erste Auslassöffnung 94 auf. Der zweite Trichter 66 weist dabei eine ovale Einlassgeometrie auf, welche sich auf eine kreisförmige Auslassgeometrie an der ersten Auslassöffnung 94 verjüngt, um den Anschluss eines zylindrischen Abgasrückführungskanals 42 zu ermöglichen. Das Gehäuse 86 des Partikelfilters 32 ist aus einem metallischen Werkstoff, insbesondere aus einem Stahl, hergestellt, um den im Abgaskanal auftretenden thermischen Belastungen standzuhalten.

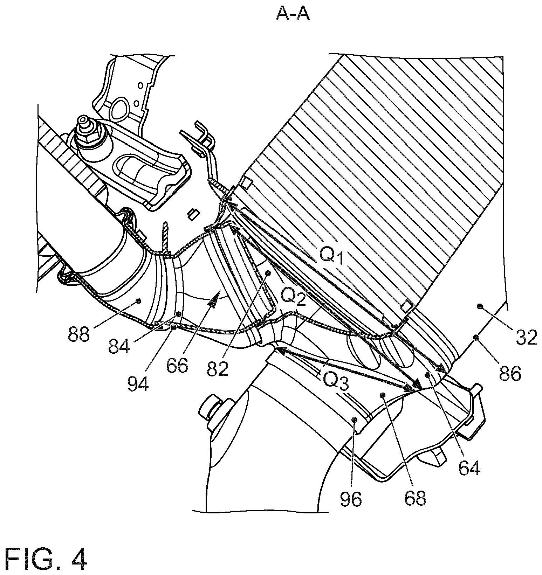

In Figur 4 ist eine weitere Darstellung des Partikelfilters 32 gezeigt, bei dem die Verzweigung 34 vergrößert dargestellt ist. An dem zweiten Trichter 66 ist ein vorzugsweise scheibenförmiges Filterelement 70 angeordnet, welches einen Querschnitt von vorzugsweise etwa 4000 mm² aufweist. Dazu weist der zweite Trichter 66 an seiner Einlassseite 82 einen Strömungsquerschnitt A von mindestens 4000 mm² auf, um ein Einströmen in den Abgasrückführungskanal 42 der Niederdruck-Abgasrückführung 40 zu begünstigen. Dadurch kann der Abgasgegendruck in dem Abgassystem 20 reduziert werden, wodurch der Verbrauch des Verbrennungsmotors 10 gesenkt oder die Leistung erhöht werden können.

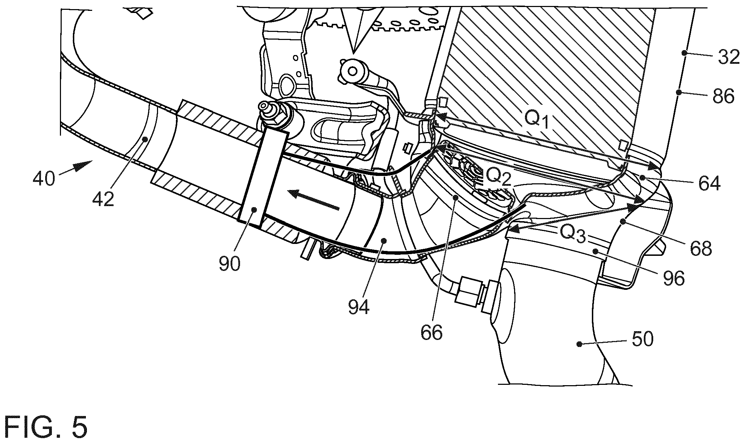

In Figur 5 ist ein weiteres Ausführungsbeispiel eines erfindungsgemäßen Abgasnachbehandlungssystems dargestellt. Bei im Wesentlichen gleichem Aufbau wie zu den vorherigen Figuren ausgeführt, wird im Folgenden nur auf die Unterschiede eingegangen. Gemäß der in Figur 5 dargestellten Ausführungsvariante weist der Abgasrückführungskanal 42 der Niederdruck-Abgasrückführung 40 eine verschiebbare Trennstelle 90 auf, mit der die Länge des Abgasrückführungskanals 42 individuell auf einen jeweiligen Verbrennungsmotor 10 abgestimmt werden kann. Alternativ oder zusätzlich ist mit Vorteil vorgesehen, dass der Abgasrückführungskanal 42 verschiebbar gelagert ist und auf diese Weise die Länge L des Abgasrückführungskanals veränderbar ist, um sie an den entsprechenden Verbrennungsmotor 10 anzupassen und eine entsprechende Entkopplung zwischen dem Partikelfilter 32 und der Niederdruck-Abgasrückführung 40 zu ermöglichen.

### Bezugszeichenliste

- 10: Verbrennungsmotor
- 12: Motorblock
- 14: Auslass / Auslassseite
- 16: Einlass / Einlassseite
- 18: Stirnseite

- 20: Abgassystem
- 22: Abgaskrümmer
- 24: Abgaskanal
- 26: Abgasturbolader
- 28: Turbine

- 30: erster Katalysator / Oxidationskatalysator
- 32: Partikelfilter
- 34: Verzweigung
- 36: Endrohr
- 38: Biegung

- 40: Niederdruck-Abgasrückführung
- 42: Abgasrückführungskanal
- 44: Entkopplungselement
- 46: Niederdruck-Abgasrückführungs-Kühler
- 48: Befestigungsmittel

- 50: Hauptkanal
- 52: Bolzen
- 54: Einmündung
- 56: Ansaugtrakt
- 58: Filterkörper
- 60: Schraube
- 62: Gehäuse
- 64: erster Trichter (DPF-Auslass)
- 66: zweiter Trichter (ND-EGR Trichter)
- 68: dritter Trichter (Auslasstrichter)

- 70: Filterelement
- 72: Brennraum
- 74: Frischgasleitung
- 76: Luftfilter
- 78: Verdichter

- 80: Ladeluftkühler
- 82: Einlassseite
- 84: Auslassseite
- 86: Gehäuse
- 88: Übergangsstelle
- 90: Trennstelle

- 92: Einlassöffnung
- 94: erste Auslassöffnung
- 96: zweite Auslassöffnung
- 98: Abgasklappe

- α: Biegungswinkel
- A: Strömungsquerschnitt am Einlass des zweiten Trichters
- Dᵢ: Innendurchmesser der Niederdruck-Abgasrückführung
- L: Länge der Niederdruck-Abgasrückführung
- Q: Querschnitt des Abgaskanals
- Q₁: Querschnitt des Abgaskanals am Filterkörper
- Q₂: Querschnitt des Abgaskanals am Auslass des ersten Trichter
- Q₃: Einlassquerschnitt des dritten Trichters

## Patentansprüche

1. Abgasnachbehandlungssystem für einen Verbrennungsmotor (10), mit einem Abgassystem (20), welches mit einem Auslass (14) des Verbrennungsmotors (10) verbunden ist, wobei das Abgassystem einen Abgaskanal (24) aufweist, in welchem in Strömungsrichtung eines Abgases durch den Abgaskanal (24) eine Turbine (28) eines Abgasturboladers (26) und stromabwärts der Turbine (28) ein Partikelfilter (32) angeordnet ist, wobei der Partikelfilter (32) einen Filterkörper (58) aufweist, wobei stromabwärts des Partikelfilters (32) ein erster Abgastrichter (64) vorgesehen ist, um den Querschnitt (Q) des Abgaskanals (24) von einem ersten Querschnitt (Q₁) des Filterkörpers (58) auf einen zweiten Querschnitt (Q₂) zu reduzieren, wobei sich der erste Abgastrichter (64) in einen zweiten Abgastrichter (66) und einen dritten Abgastrichter (68) verzweigt, wobei der zweite Abgastrichter mit einer Niederdruck-Abgasrückführung (40) verbunden ist, und wobei der dritte Trichter (68) mit einem Hauptkanal (50) des Abgassystems (20) verbunden ist,
**dadurch gekennzeichnet, dass** der zweite Abgastrichter (66) ein Filterelement (70) trägt und wobei an einer Übergangsstelle (88) zwischen dem zweiten Abgastrichter (66) und einem Abgasrückführungskanal (42) ein Entkopplungselement (44) vorgesehen ist.

2. Abgasnachbehandlungsvorrichtung nach Anspruch 1, **dadurch gekennzeichnet, dass** der zweite Trichter (66) an seiner Einlassseite (82) einen ovalen Querschnitt aufweist und sich auf seiner Auslassseite (84) auf einen runden Querschnitt verjüngt.

3. Abgasnachbehandlungsvorrichtung nach Anspruch 1 oder 2, **dadurch gekennzeichnet, dass** der erste Trichter (64) in ein Gehäuse (86) des Partikelfilters (32) integriert ist.

4. Abgasnachbehandlungsvorrichtung nach einem der Ansprüche 1 bis 3, **dadurch gekennzeichnet, dass** der zweite Trichter (66) an seiner Einlassseite (82) einen Strömungsquerschnitt (A) von mindestens 4000 mm² aufweist.

5. Abgasnachbehandlungssystem nach einem der Ansprüche 1 bis 4, **dadurch gekennzeichnet, dass** ein Abgasrückführungskanal (42) der Niederdruck-Abgasrückführung (40) verschiebbar gelagert ist.

6. Abgasnachbehandlungssystem nach einem der Ansprüche 1 bis 5, **dadurch gekennzeichnet, dass** an einem Abgasrückführungskanal (42) der Niederdruck-Abgasrückführung (40) eine verschiebbare Trennstelle (90) ausgebildet ist.

7. Abgasnachbehandlungssystem nach einem der Ansprüche 1 bis 6, **dadurch gekennzeichnet, dass** der zweite Trichter (66) eine von dem dritten Trichter (68) unterschiedliche Einlaufgeometrie aufweist.

8. Abgasnachbehandlungssystem nach Anspruch 7, **dadurch gekennzeichnet, dass** der dritte Trichter (68) einen größeren Einlassquerschnitt (Q₃) als der zweite Trichter (66) aufweist.

9. Abgasnachbehandlungssystem nach einem der Ansprüche 1 bis 8, **dadurch gekennzeichnet, dass** ein Abgasrückführungskanal (42) der Niederdruck-Abgasrückführung (40) einen Innendurchmesser von 30 mm bis 50 mm aufweist.

10. Verbrennungsmotor (10) mit einem Abgasnachbehandlungssystem nach einem der Ansprüche 1 bis 9.

## Claims

1. Exhaust aftertreatment system for an internal combustion engine (10), having an exhaust system (20) which is connected with an outlet (14) of said internal combustion engine (10), wherein the exhaust system has an exhaust duct (24) in which a turbine (28) of an exhaust gas turbocharger (26) is arranged in the direction of flow of exhaust gas through the exhaust duct (24), and in which a particulate filter (32) is arranged downstream of the turbine (28); wherein the particulate filter (32) has a filter body (58); wherein a first exhaust gas funnel (64) is provided downstream of the particulate filter (32) in order to reduce the cross-section (Q) of the exhaust duct (24) from a first cross-section (Q₁) of the filter body (58) to a second cross-section (Q₂); wherein the first exhaust gas funnel (64) branches into a second exhaust gas funnel (66) and a third exhaust gas funnel (68); wherein the second exhaust gas funnel is connected to a low-pressure exhaust gas recirculation (40); and wherein the third funnel (68) is connected to a main duct (50) of the exhaust system (20),
**characterized in that** the second exhaust gas funnel (66) carries a filter element (70), and wherein a decoupling element (44) is provided at a transition point (88) between the second exhaust gas funnel (66) and an exhaust gas recirculation duct (42).

2. Exhaust aftertreatment system according to claim 1, **characterized in that** the second funnel (66) has an oval cross-section at its inlet end (82) and tapers to a round cross-section at its outlet end (84).

3. Exhaust aftertreatment system according to claim 1 or 2, **characterized in that** the first funnel (64) is integrated into a housing (86) of the particle filter (32).

4. Exhaust aftertreatment system according to any one of claims 1 to 3, **characterized in that** the second funnel (66) has a flow cross-section (A) of at least 4000 mm² at its inlet end (82).

5. Exhaust aftertreatment system according to any one of claims 1 to 4, **characterized in that** an exhaust gas recirculation duct (42) of the low-pressure exhaust gas recirculation system (40) is mounted so as to be displaceable.

6. Exhaust aftertreatment system according to any one of claims 1 to 5, **characterized in that** a displaceable separation point (90) is formed at an exhaust gas recirculation duct (42) of the low-pressure exhaust gas recirculation system (40).

7. Exhaust aftertreatment system according to any one of claims 1 to 6, **characterized in that** the second funnel (66) has an inlet geometry differing from that of the third funnel (68).

8. Exhaust aftertreatment system according to claim 7, **characterized in that** the third funnel (68) has a larger inlet cross-section (Q₃) than the second funnel (66).

9. Exhaust aftertreatment system according to any one of claims 1 to 8, **characterized in that** an exhaust gas recirculation duct (42) of the low-pressure exhaust gas recirculation system (40) has an internal diameter of 30 mm to 50 mm.

10. Internal combustion engine (10) comprising an exhaust gas aftertreatment system according to any one of claims 1 to 9.

## Revendications

1. Système de post-traitement de gaz d'échappement pour un moteur à combustion interne (10), comprenant un système de gaz d'échappement (20), qui est relié à une sortie (14) du moteur à combustion interne (10), le système de gaz d'échappement présentant un canal à gaz d'échappement (24), dans lequel sont disposés, dans le sens d'écoulement d'un gaz d'échappement à travers le canal à gaz d'échappement (24), une turbine (28) d'un turbocompresseur de gaz d'échappement (26) et, en aval de la turbine (28), un filtre à particules (32), le filtre à particules (32) présentant un corps de filtre (58), un premier cône à gaz d'échappement (64) étant situé en aval du filtre à particules (32), afin de réduire la section transversale (Q) du canal à gaz d'échappement (24) d'une première section transversale (Q₁) du corps de filtre (58) à une deuxième section transversale (Q₂), le premier cône à gaz d'échappement (64) se ramifiant en un deuxième cône à gaz d'échappement (66) et en un troisième cône à gaz d'échappement (68), le deuxième cône à gaz d'échappement étant relié à un retour de gaz d'échappement basse pression (40) et le troisième cône (68) étant relié à un canal principal (50) du système de gaz d'échappement (20),
**caractérisé en ce que** le deuxième cône à gaz d'échappement (66) porte un élément de filtre (70) et un élément de découplage (44) étant situé au niveau d'un point de transition (88) entre le deuxième cône à gaz d'échappement (66) et un canal de retour de gaz d'échappement (42).

2. Dispositif de post-traitement de gaz d'échappement selon la revendication 1, **caractérisé en ce que** le deuxième cône (66) présente, au niveau de son côté d'entrée (82), une section transversale ovale puis se rétrécit au niveau de son côté de sortie (84) en une section transversale ronde.

3. Dispositif de post-traitement de gaz d'échappement selon la revendication 1 ou 2, **caractérisé en ce que** le premier cône (64) est intégré dans un boîtier (86) du filtre à particules (32).

4. Dispositif de post-traitement de gaz d'échappement selon l'une quelconque des revendications 1 à 3, **caractérisé en ce que** le deuxième cône (66) présente, sur son côté d'entrée (82), une section transversale d'écoulement (A) d'au moins 4000 mm².

5. Système de post-traitement de gaz d'échappement selon l'une quelconque des revendications 1 à 4, **caractérisé en ce qu'**un canal de retour de gaz d'échappement (42) du retour de gaz d'échappement basse pression (40) est disposé de manière déplaçable.

6. Système de post-traitement de gaz d'échappement selon l'une quelconque des revendications 1 à 5, **caractérisé en ce qu'**un point de séparation (90) déplaçable est formé au niveau d'un canal de retour de gaz d'échappement (42) du retour de gaz d'échappement basse pression (40).

7. Système de post-traitement de gaz d'échappement selon l'une quelconque des revendications 1 à 6, **caractérisé en ce que** le deuxième cône (66) présente une géométrie d'entrée différente de celle du troisième cône (68).

8. Système de post-traitement de gaz d'échappement selon la revendication 7, **caractérisé en ce que** le troisième cône (68) présente une section transversale d'entrée (Q₃) supérieure à celle du deuxième cône (66).

9. Système de post-traitement de gaz d'échappement selon l'une quelconque des revendications 1 à 8, **caractérisé en ce qu'**un canal de retour de gaz d'échappement (42) du retour de gaz d'échappement basse pression (40) présente un diamètre interne de 30 mm à 50 mm.

10. Moteur à combustion interne (10) comprenant un système de post-traitement de gaz d'échappement selon l'une quelconque des revendications 1 à 9.
